# EUROPÄISCHE PATENTANMELDUNG

(11) **EP 2 863 178 A2**
(43) Veröffentlichungstag der Anmeldung: **22.04.2015**
(21) Anmeldenummer: 14185129.5
(22) Anmeldetag: 17.09.2014
(51) Int. Cl.: G01C 21/20, G01C 22/00, G09B 29/10

(54) **Vorrichtung und Verfahren zur Ermittlung von Eigenschaften eines Streckenabschnitts für eine digitale Karte**

(30) Priorität: 17.10.2013 DE 102013221050
(71) Anmelder: ROBERT BOSCH GMBH, 70442 Stuttgart (DE)
(72) Erfinder: Schroeder, Gernot, 71636 Ludwigsburg (DE); Mazzola, Markus, 70435 Stuttgart (DE); Moeser, Nicolas, 53121 Bonn (DE); Schaaf, Gunther, 70806 Kornwestheim (DE); Haug, Matthias, 71272 Renningen (DE); Schumacher, Jan, 71636 Ludwigsburg (DE)

(57) **Zusammenfassung**

Die vorliegende Erfindung betrifft ein motorisch und/oder mit Muskelkraft betreibbares Fahrzeug (1), insbesondere Elektrofahrrad, mit einem ersten Sensor, welcher eine Fahrgröße des Fahrzeugs erfasst, wobei der erste Sensor ein Vibrationssensor (15) zur Erfassung einer Vibration des Fahrzeugs ist, einem zweiten Sensor, welcher eine aktuelle Position des Fahrzeugs erfasst, einer Auswerteeinheit (10), welche eingerichtet ist, basierend auf den Signalen des ersten Sensors Eigenschaften des Streckenabschnitts zu bestimmen und in Beziehung zur aktuellen Position des Fahrzeugs zu setzen, und einer Schnittstelle (17), über welche Daten der Auswerteeinheit ausgebbar sind.

## Beschreibung

### Stand der Technik

Die vorliegende Erfindung betrifft eine Vorrichtung und ein Verfahren zur Ermittlung von Eigenschaften eines Streckenabschnitts für eine digitale Karte, insbesondere für ein Elektrofahrrad, sowie ein Fahrzeug und eine Servereinrichtung.

Bei Fahrrädern sind Fahrradcomputer bekannt, welche, basierend auf GPS-Daten Streckendaten und Fahrleistungen des Fahrers aufzeichnen können. Ferner können zusätzlich noch persönliche Daten des Fahrers, z.B. die Herzfrequenz oder dergleichen, erfasst werden. Insbesondere mit Fahrrädern können jedoch neben asphaltierten Wegen und Straßen insbesondere auch nicht-asphaltierte Wege befahren werden. Aufgrund des dort häufig losen Untergrunds, Unebenheiten und dergleichen sind die dortigen Fahrleistungen mit Fahrrädern deutlich geringer als auf asphaltierten Wegen. Derartige schlechte Eigenschaften von Streckenabschnitten werden von den bekannten Navigationssystemen für Fahrräder nicht beachtet. Hier werden häufig nur beispielsweise schnellste Route oder einfachste Route, bei der möglichst wenige Steigungen vorhanden sind, als Routenvorschläge ausgegeben.

Es wäre daher wünschenswert, dass auch zusätzliche Eigenschaften von Streckenabschnitten bei einer Routenauswahl berücksichtigt werden.

### Offenbarung der Erfindung

Das erfindungsgemäße, motorisch und/oder mit Muskelkraft betreibbare Fahrzeug, insbesondere Elektrofahrrad, mit den Merkmalen des Anspruchs 1 weist den Vorteil auf, dass während des Befahrens eines Streckenabschnitts Eigenschaften dieses Streckenabschnitts durch eine Erfassung von Vibrationen mittels eines Vibrationssensors erfasst werden und diese Vibrationsdaten mit aktuellen Positionsdaten des Fahrzeugs in Beziehung gesetzt werden. Dies wird vorzugsweise mittels einer Auswerteeinheit oder dgl. durchgeführt. Ferner umfasst das Fahrzeug eine Schnittstelle, über welche die Daten der Auswerteeinheit abgebbar sind. Somit werden erfindungsgemäß Vibrationen des Fahrzeugs genutzt, um Eigenschaften eines Streckenabschnitts zu definieren.

Die Unteransprüche zeigen bevorzugte Weiterbildungen der Erfindung.

Bevorzugt ist ein weiterer Sensor zur Erfassung eines Federwegs einer Feder des Fahrzeugs vorgesehen. Hierbei kann beispielsweise ein Federweg einer Federgabel oder einer Feder für das Hinterrad des Fahrzeugs erfasst werden.

Weiter bevorzugt ist ein weiterer Sensor zur Erfassung eines Energieverbrauchs einer Batterie des Fahrzeugs. Dadurch kann erfasst werden, wie viel elektrische Energie ein elektrischer Antrieb des Fahrzeugs verbraucht. Abhängig vom Verbrauch kann hierbei auf einen Zustand des befahrenen Streckenabschnitts geschlossen werden. D.h., wenn der Verbrauch hoch ist, liegt tendenziell eine schlechtere Wegstrecke vor, als wenn der Verbrauch niedrig ist. Hierbei können auch noch weitere Fahrzeuggrößen, wie beispielsweise eine Geschwindigkeit des Fahrzeugs, eine Steigung/Gefälle des Streckenabschnitts usw. berücksichtigt werden, um die Aussagekraft des Energieverbrauchs weiter zu präzisieren.

Weiter bevorzugt ist ein Drehzahlsensor vorgesehen, welcher eine Drehzahl und dadurch einen Schlupf an einem Rad, insbesondere einem Hinterrad, erfasst. Hierbei kann davon ausgegangen werden, dass wenn ein Schlupf an einem Hinterrad auftritt, tendenziell eher ein loser Untergrund oder ein matschiger Untergrund oder dergleichen vorliegt und somit auf eine schlechte Wegstrecke geschlossen werden kann.

Weiter bevorzugt ist ein Neigungssensor vorgesehen. Der Neigungssensor erfasst vorzugsweise eine Seitenneigung des Fahrzeugs. Hierdurch können beispielsweise Hindernisse auf dem Fahrweg, wie z.B. große Steine oder Schlaglöcher oder dergleichen, denen der Fahrer ausweichen muss, erfasst werden. Alternativ ist der Neigungssensor zur Erfassung einer vertikalen Neigung vorgesehen, um Steigungen und Gefälle zu erfassen.

Weiter bevorzugt ist ein Geschwindigkeitssensor zur Erfassung einer aktuellen Geschwindigkeit des Fahrzeugs vorgesehen.

Es sei angemerkt, dass das Fahrzeug vorzugsweise eine Vielzahl von verschiedenen Sensoren, wie beispielsweise die vorhergehend beschriebenen Sensoren, umfasst, und eine Auswerteeinheit die jeweils durch die Vielzahl der ersten Sensoren erfassten Fahrgrößen in Beziehung zur aktuellen Position setzt und daraus eine Eigenschaft eines Streckenabschnitts bestimmt.

Der zweite Sensor zur Erfassung einer aktuellen Position des Fahrzeugs ist vorzugsweise ein GPS-Sensor. Der GPS-Sensor kann fest am Fahrzeug angeordnet sein oder alternativ kann der GPS-Sensor einer mobilen Einrichtung verwendet werden, beispielsweise eines Mobiltelefons, welcher mit der Auswerteeinheit des Fahrzeugs verbunden wird.

Ferner betrifft die vorliegende Erfindung eine Servereinrichtung, welche eingerichtet ist, basierend auf Daten eines motorisch und/oder mit Muskelkraft betreibbaren Fahrzeugs, insbesondere Elektrofahrrads, Eigenschaftsprofile von Streckenabschnitten zu erzeugen. Die Daten des Fahrzeugs basieren dabei wenigstens auf Vibrationen des Fahrzeugs sowie einer Position des Fahrzeugs, wobei die Vibrationen in Beziehung der aktuellen Position des Fahrzeugs gebracht werden, um dem aktuellen Streckenabschnitt entsprechende Eigenschaften zuzuordnen. Starke Vibrationen deuten dabei auf einen schlechten Wegabschnitt hin. Die Servereinrichtung ist ferner bevorzugt eingerichtet, die Eigenschaften eines Streckenabschnitts zusätzlich noch auf weiteren, wie vorstehend beschriebenen Zuständen des Fahrzeugs, beispielsweise eines Federwegs, eines Energieverbrauchs, einer Raddrehzahl, einer Neigung, einer Beschleunigung und/oder einer Geschwindigkeit des Fahrzeugs zu bestimmen.

Die Servereinrichtung weist weiter bevorzugt eine Datenbank für die ermittelten Eigenschaften der Streckenabschnitte auf. Die Servereinrichtung ist dabei eingerichtet, die Datenbank, basierend auf den vom Fahrzeug übermittelten Daten, hinsichtlich der Eigenschaften der Streckenabschnitte zu aktualisieren. Dadurch ist es beispielsweise möglich, dass die Servereinrichtung aktuell neu auftretende Hindernisse, Verschlechterung von Wegen und dergleichen in der Datenbank abspeichert.

Hierbei können die vom Fahrzeug erfassten und in Bezug zum Streckenabschnitt gesetzten Daten in Echtzeit übertragen werden oder während der Fahrt mit dem Fahrzeug gespeichert werden und anschließend, beispielweise an einen stationären Rechner zur Servereinrichtung übertragen werden.

Weiter bevorzugt ist die Servereinrichtung eingerichtet, basierend auf den erfassten Eigenschaften der Streckenabschnitte Informationen hinsichtlich einer Eignung für einen bestimmten Fahrzeugtyp auszugeben. Beispielsweise könnte eine Ausgabe lauten: "geeignet für Rennräder" oder "nicht geeignet für Rennräder".

Bei einer Echtzeitübertragung der vom Fahrzeug erfassten Eigenschaften des Streckenabschnitts können beispielsweise auch andere Fahrer gewarnt werden, wenn sich z.B. in Abhängigkeit des Wetters (z.B. Aufweichung des Bodens, Blockieren des Weges z.B. durch einen umgestürzten Baum oder dergleichen) Verschlechterungen des Streckenabschnitts ergeben. Auch kann die Servereinrichtung eingerichtet sein, zusätzliche Daten aus anderen Quellen, z.B. Pkw-Dichte oder zusätzlich z.B. Tageszeit, Jahreszeit usw., zu berücksichtigen. Somit kann eine verbesserte Modellvorhersage erreicht werden und insbesondere bei einer Routenplanung berücksichtigt werden.

Weiter bevorzugt ist die Auswerteeinheit so eingerichtet, die durch den ersten Sensor erfassten Fahrgrößendaten mit gespeicherten Fahrgrößendaten für die aktuelle Position des Fahrzeugs zu vergleichen. Anhand des Vergleichs ergibt sich somit die Möglichkeit, dass bei Abweichungen, beispielsweise wenn eine Abweichung über einem vorbestimmten Schwellenwert liegt, eine Warnmeldung an den Fahrer des Fahrzeugs auszugeben oder eine Warnmeldung, z.B. "Achtung, verschlechterte Strecke", in der Datenbank der Servereinrichtung abzuspeichern.

Die erfindungsgemäße Vorrichtung zur Ermittlung von Eigenschaften von Streckenabschnitten für eine digitale Karte mit den Merkmalen des Anspruchs 9 weist dem gegenüber den Vorteil auf, dass während eines Befahrens eines Streckenabschnitts Eigenschaften dieses Streckenabschnitts erfasst werden können und an eine Servereinrichtung übertragen werden können. Die Servereinrichtung ist eingerichtet, basierend auf den übertragenen Daten Eigenschaftsprofile von Streckenabschnitten zu erstellen. Die erfindungsgemäße Vorrichtung umfasst dabei ein motorisch und/oder mit Muskelkraft betreibbares Fahrzeug, insbesondere Elektrofahrrad, mit einem ersten Sensor, welcher eine Fahrgröße des Fahrzeugs erfasst, wobei die Fahrgröße Vibrationen des Fahrzeugs sind. Ferner ist ein zweiter Sensor am Fahrzeug vorgesehen, welcher eine aktuelle Position des Fahrzeugs erfasst. Das Fahrzeug umfasst ferner eine Auswerteeinheit, die eingerichtet ist, die erfasste Position des Fahrzeugs mit der erfassten Fahrgröße in Beziehung zu setzen, um Streckenmerkmale des Streckenabschnitts zu bestimmen. Ferner umfasst das Fahrzeug eine Schnittstelle, über welche die erfassten Daten an eine Servereinrichtung übertragbar sind. Die Servereinrichtung ist dabei eingerichtet, basierend auf den erfassten Daten des Fahrzeugs Eigenschaftsprofile von Streckenabschnitten zu erzeugen. Diese können dann beispielsweise bei einer Routenplanung berücksichtigt werden. Somit kann erfindungsgemäß die Servereinrichtung eine digitale Karte erzeugen, welche zusätzlich auch Eigenschaften von Streckenabschnitten ausgeben kann. Weiter bevorzugt werden auch beliebige Kombinationen der vorhergehend beschriebenen, mittels Sensoren am Fahrzeug erfassten Zustände des Fahrzeugs zur Ermittlung der Eigenschaften eines Streckenabschnitts hinzugezogen.

Die Erfindung betrifft ferner ein Verfahren zur Ermittlung von Eigenschaften von Streckenabschnitten, insbesondere für eine digitale Karte, welche unter Verwendung eines motorisch und/oder mit Muskelkraft betreibbaren Fahrzeugs, insbesondere Elektrofahrrads, wenigstens eine Fahrgröße betreffend eine Vibration des Fahrzeugs erfasst und die erfasste Vibrations-Fahrgröße mit der aktuellen Position des Fahrzeugs in Beziehung setzt. Dadurch können Informationen über eine Eigenschaft eines Streckenabschnitts ermittelt werden und an eine Servereinrichtung übermittelt werden. Die Servereinrichtung erzeugt dann, basierend auf den Eigenschaftsdaten der Streckenabschnitte Eigenschaftsprofile von Streckenabschnitten. Diese können dann beispielsweise bei einer Routenplanung berücksichtigt werden.

Besonders bevorzugt verwendet das erfindungsgemäße Verfahren dabei eine Vielzahl von Fahrgrößen des Fahrzeugs. Insbesondere in Verbindung mit einem Elektrofahrrad ist die vorliegende Erfindung besonders vorteilhaft, da das Elektrofahrrad üblicherweise schon über eine Vielzahl von Sensoren verfügt, welche Fahrgrößen des Fahrzeugs ermitteln. Diese Vielzahl von ermittelten Fahrgrößen können dann in Bezug zur aktuellen Position des Fahrzeugs gebracht werden und daraus eine Eigenschaft des gerade befahrenen Streckenabschnitts ermittelt werden. Dadurch ergibt sich bei einem Elektrofahrrad kein zusätzlicher Sensormehraufwand. Die Vielzahl der ermittelten Fahrgrößen des Fahrzeugs kann eine beliebige Kombination von Sensordaten sein, beispielsweise eines Federwegs, einer Beschleunigung, einer Geschwindigkeit des Fahrzeugs, einer Neigung des Fahrzeugs, eines Radschlupfes eines Rades des Fahrzeugs, eines Energieverbrauchs einer Batterie, eines von einem Fahrer aufgebrachten Drehmoments an einem Kurbeltrieb des Fahrzeugs und dergleichen sein.

Weiter bevorzugt umfasst das erfindungsgemäße Verfahren ferner, dass die Servereinrichtung eine Route zwischen einem Startpunkt und einem Endpunkt in Abhängigkeit der ermittelten Eigenschaften der Streckenabschnitte bestimmt. Hierdurch kann eine Routenplanung unter Berücksichtigung von Streckeneigenschaften bereitgestellt werden. Die Routen sind vorzugsweise in einer Routendatenbank abgespeichert und werden insbesondere durch aktuelle Informationen hinsichtlich der Streckenabschnittseigenschaften aktualisiert.

### Zeichnung

Nachfolgend wird ein bevorzugtes Ausführungsbeispiel der Erfindung unter Bezugnahme auf die begleitende Zeichnung im Detail beschrieben. In der Zeichnung ist:

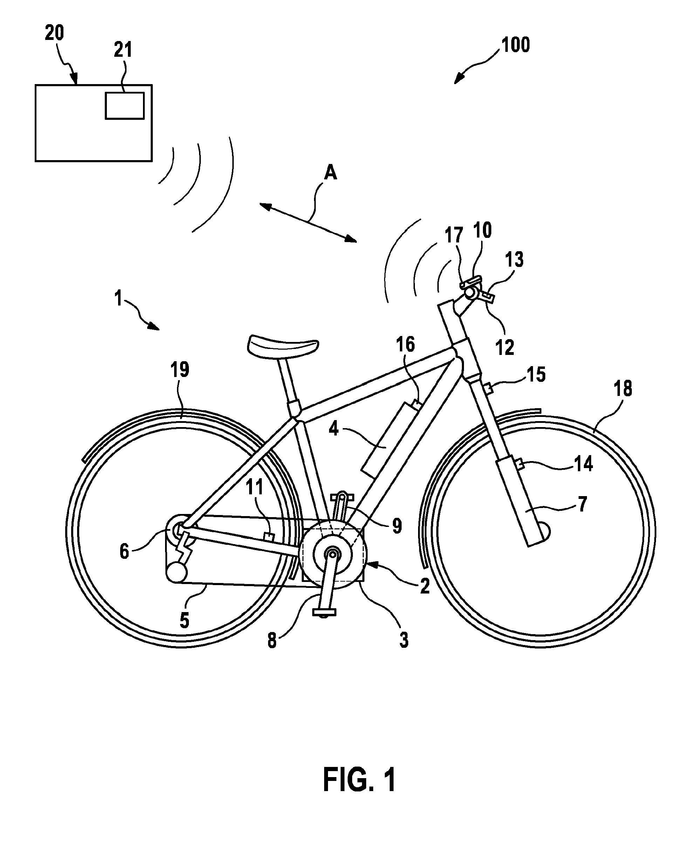

- Figur 1: eine schematische Darstellung einer Vorrichtung zur Ermittlung von Eigenschaften eines Streckenabschnitts gemäß einem bevorzugten Ausführungsbeispiel der Erfindung.

### Bevorzugte Ausführungsform der Erfindung

Nachfolgend wird unter Bezugnahme auf Figur 1 eine Vorrichtung 100 zur Ermittlung von Eigenschaften von Streckenabschnitten im Detail beschrieben. Wie aus Figur 1 ersichtlich ist, umfasst die Vorrichtung 100 ein Elektrofahrrad 1 sowie eine Servereinrichtung 20. Das Elektrofahrrad 1 und die Servereinrichtung 20 können dabei drahtlos in Echtzeit miteinander kommunizieren. Dies ist in Figur 1 durch den Doppelpfeil A dargestellt.

Das Elektrofahrrad 1 umfasst einen Kurbeltrieb 2, einen elektrischen Antrieb 3 und eine Batterie 4. An einem Hinterrad 19 des Elektrofahrrads 1 ist ferner eine Gangschaltung 6 angeordnet. Eine Kette 5 verbindet die Gangschaltung 6 mit dem Kurbeltrieb 2. Bezugszeichen 8 und 9 bezeichnen dabei Kurbeln des Kurbeltriebs 2.

Das Elektrofahrrad 1 umfasst weiterhin eine Federgabel 7, welche an einem Vorderrad 18 des Elektrofahrrads angeordnet ist.

Das Elektrofahrrad 1 umfasst ferner eine Auswerteeinheit 10, welche eine erfasste aktuelle Position des Elektrofahrrads 1 mit einer Fahrgröße des Elektrofahrrads 1 in Beziehung setzen kann.

Um Fahrgrößen des Elektrofahrrads 1 zu erfassen, umfasst das Elektrofahrrad 1 eine Vielzahl von Sensoren. Beispielsweise ist am Rahmen des Elektrofahrrads ein Drehzahlsensor 11 vorgesehen, welcher eine Drehzahl des Hinterrads 19 erfasst und, basierend auf dieser Drehzahl, sowohl einen Schlupf am Hinterrad bestimmen kann als auch eine Geschwindigkeit des Elektrofahrrads bestimmen kann. Weiterhin ist ein Neigungssensor 13 vorgesehen, welcher eine Neigung erfassen kann. Durch Erfassen der Seitenneigung können beispielsweise Ausweichmanöver erfasst werden. An der Federgabel 7 ist weiter ein Federwegsensor 14 angeordnet, welcher einen Federweg der Federgabel 7 erfasst. Hierdurch kann auf eine Güte des Streckenabschnitts geschlossen werden. Weiterhin ist am Elektrofahrrad 1 ein Vibrationssensor 15 angeordnet, welcher Vibrationen des Elektrofahrrads 1 erfasst. Die Vibrationen werden hierbei üblicherweise aufgrund einer schlechten Wegstrecke in das Elektrofahrrad 1 eingebracht. Das Bezugszeichen 16 bezeichnet einen Energieverbrauchssensor, welcher an der Batterie 4 angeordnet ist und einen Energieverbrauch bestimmt.

Weiterhin ist ein GPS-Sensor 12 vorgesehen, welcher eine aktuelle Position des Elektrofahrrads 1 ermittelt.

An der Auswerteeinheit 10 ist ferner noch eine Schnittstelle 17 für die drahtlose Kommunikation mit der Servereinrichtung 20 vorgesehen.

Vorzugsweise sind dabei die Schnittstelle 17 und die Auswerteeinheit 10 in eine am Elektrofahrrad 1 vorhandene Steuereinrichtung zur Steuerung des elektrischen Antriebs 3 integriert.

Die Servereinrichtung 20 umfasst neben der Kommunikationseinrichtung zur Kommunikation mit dem Elektrofahrrad 1 eine Datenbank 21. In der Datenbank 21 werden Eigenschaften von Streckenabschnitten gespeichert. Sobald ein Fahrzeug einen Streckenabschnitt befährt und die Daten in Echtzeit zur Servereinrichtung 20 übermittelt, werden die gespeicherten Eigenschaften des befahrenen Streckenabschnitts gegebenenfalls an die neu gewonnenen Erkenntnisse angepasst.

Erfindungsgemäß kann nun basierend auf der Vielzahl der erfassten Fahrgrößen des Elektrofahrrads 1 auf die Eigenschaften des gerade befahrenen Streckenabschnitts geschlossen werden und die Eigenschaften in Beziehung zu einer jeweiligen Position des Elektrofahrrads 1 gesetzt werden und somit Eigenschaftsdaten erzeugt werden. Dabei wertet die Auswerteeinheit 10 vorzugsweise eine Vielzahl von Sensorsignalen aus, um auf eine Wegbeschaffenheit zu schließen.

Die Servereinrichtung 20 kann somit eine digitale Karte bereitstellen, welche Eigenschaften von Streckenabschnitten aufweist. Gegebenenfalls kann die Datenbank 21 noch weitere Parameter, wie beispielsweise Tageszeit, Jahreszeit, aktuelles Wetter, Verkehrsdichten usw., zusätzlich speichern und bei einer Routenplanung berücksichtigen. Auch ist es erfindungsgemäß möglich, neben üblichen Parametern zur Routenführung, wie z.B. schnellste Route, kürzeste Route, sicherste Route, jetzt weitere Routenparameter, wie z.B. schwierigste Route, einfachste Route, oder eine einem eigenen Leistungsniveau entsprechendste Route, ausgewählt werden.

Auch ist es möglich, dass beispielsweise ein individueller Trainingsplan oder dergleichen in der Auswerteeinheit 10 und/oder der Datenbank 21 abgespeichert ist.

## Patentansprüche

1. Motorisch und/oder mit Muskelkraft betreibbares Fahrzeug (1), insbesondere Elektrofahrrad, mit
- einem ersten Sensor, welcher eine Fahrgröße des Fahrzeugs erfasst, wobei der erste Sensor ein Vibrationssensor (15) zur Erfassung einer Vibration des Fahrzeugs ist,
- einem zweiten Sensor, welcher eine aktuelle Position des Fahrzeugs erfasst,
- einer Auswerteeinheit (10), welche eingerichtet ist, basierend auf den Signalen des ersten Sensors Eigenschaften des Streckenabschnitts zu bestimmen und in Beziehung zur aktuellen Position des Fahrzeugs zu setzen, und
- einer Schnittstelle (17), über welche Daten der Auswerteeinheit ausgebbar sind.

2. Vorrichtung nach Anspruch 1, ferner umfassend wenigstens einen weiteren Sensor,
- welcher ein Federwegsensor (14) zur Erfassung eines Federwegs einer Federeinrichtung (7) ist, und/oder
- welcher ein Energieverbrauchssensor (16) zur Erfassung eines Energieverbrauchs einer Batterie (4) des Fahrzeugs ist, und/oder
- welcher ein Drehzahlsensor (11) zur Erfassung einer Raddrehzahl ist, und/oder
- welcher ein Neigungssensor ist, welcher insbesondere eine Seitenneigung des Fahrzeugs oder eine vertikale Neigung des Fahrzeugs erfasst, und/oder
- welcher ein Geschwindigkeitssensor zur Erfassung einer Geschwindigkeit des Fahrzeugs ist.

3. Vorrichtung nach einem der vorhergehenden Ansprüche, **dadurch gekennzeichnet, dass** der zweite Sensor ein GPS-Sensor zur Erfassung einer Position des Fahrzeugs ist, wobei der GPS-Sensor fest am Fahrzeug angeordnet ist und/oder in einer mit dem Fahrzeug verbindbaren mobilen Einrichtung, insbesondere einem Mobiltelefon, angeordnet ist.

4. Vorrichtung nach einem der vorhergehenden Ansprüche, **dadurch gekennzeichnet, dass** die Auswerteeinheit (10) eingerichtet ist, erfasste Fahrgrößendaten des ersten Sensors mit gespeicherten Fahrgrößendaten für die aktuelle Position des Fahrzeugs zu vergleichen.

5. Servereinrichtung (20), welche eingerichtet ist, basierend auf Daten eines motorisch und/oder mit Muskelkraft betreibbaren Fahrzeugs (1), insbesondere Elektrofahrrads, Eigenschaftsprofile von Streckenabschnitten zu erzeugen, wobei die Daten des Fahrzeugs auf erfassten Vibrationen des Fahrzeugs und Positionen des Fahrzeugs basieren, wobei die Vibration des Fahrzeugs jeweils zu aktuellen Positionen des Fahrzeugs in Beziehung gesetzt sind.

6. Servereinrichtung nach Anspruch 5, **dadurch gekennzeichnet, dass** die Eigenschaftsprofile der Streckenabschnitte ferner auf weiteren Daten des Fahrzeugs, insbesondere Daten eines Federwegs einer Federeinrichtung (7) und/oder eines Energieverbrauchs einer Batterie und/oder einer Raddrehzahl und/oder einer vertikalen und/oder horizontalen Neigung des Fahrzeugs und/oder einer Geschwindigkeit des Fahrzeugs basiert sind.

7. Servereinrichtung nach einem der Ansprüche 5 oder 6, **dadurch gekennzeichnet, dass** die Servereinrichtung (20) eine Datenbank (21) für die ermittelten Eigenschaften der Streckenabschnitte umfasst und die Servereinrichtung (20) eingerichtet ist, die Datenbank (21), basierend auf den Daten der Auswerteeinheit (10) des Fahrzeugs, zu aktualisieren.

8. Servereinrichtung nach Anspruch 7, **dadurch gekennzeichnet, dass** die Servereinrichtung (20) eingerichtet ist, eine Route zwischen einem Startpunkt und einem Endpunkt auszugeben und Informationen über die Eigenschaften von Streckenabschnitten der Route auszugeben.

9. Vorrichtung zur Ermittlung von Eigenschaften eines Streckenabschnitts, umfassend ein Fahrzeug nach einem Ansprüche 1 bis 4 und eine Servereinrichtung nach einem der Ansprüche 5 bis 8.

10. Verfahren zur Ermittlung von Eigenschaften von Streckenabschnitten unter Verwendung eines motorisch und/oder mit Muskelkraft betreibbaren Fahrzeugs (1), insbesondere Elektrofahrrads, umfassend die Schritte:
- Erfassen wenigstens einer Fahrgröße des Fahrzeugs (1) mittels eines ersten am Fahrzeug angeordneten Sensors, wobei der Sensor eine Vibration des Fahrzeugs erfasst,
- Erfassen einer aktuellen Position des Fahrzeugs (1),
- Auswerten der erfassten Fahrgröße des Fahrzeugs und Bestimmen eines Eigenschaftswerts des Streckenabschnitts,
- In-Beziehung-Setzen des ermittelten Eigenschaftswerts mit der aktuellen Position des Fahrzeugs (1) zu Eigenschaftsdaten des Streckenabschnitts und
- Übermitteln der Eigenschaftsdaten an eine Servereinrichtung (20), welche, basierend auf den Eigenschaftsdaten Eigenschaftsprofile von Streckenabschnitten erzeugt.

11. Verfahren nach Anspruch 10, **dadurch gekennzeichnet, dass** eine Vielzahl von Fahrgrößen des Fahrzeugs (1) erfasst werden und für die Auswertung verwendet werden.

12. Verfahren nach Anspruch 11, **dadurch gekennzeichnet, dass** die Vielzahl der Fahrgrößen einen Federweg einer Federeinrichtung (7) und/oder eine Geschwindigkeit des Fahrzeugs und/oder eine vertikale und/oder horizontale Neigung des Fahrzeugs und/oder einen Radschlupf eines Rades des Fahrzeugs und/oder einen Energieverbrauch des Fahrzeugs und/oder ein von einem Fahrer aufgebrachtes Drehmoment an einem Kurbeltrieb (2) des Fahrzeugs umfasst.

13. Verfahren nach einem der Ansprüche 10 bis 12, **dadurch gekennzeichnet, dass** die Servereinrichtung (20) beim Ausgeben einer Route zwischen einem Startpunkt und einem Endpunkt zusätzlich Eigenschaften von Streckenabschnitten der Route ausgibt.
